**Europäisches Patentamt**

**European Patent Office**

**Office européen des brevets**

(11) Publication number : **0 506 356 A2**

## (12) EUROPEAN PATENT APPLICATION

(21) Application number : **92302555.5**

(22) Date of filing : **25.03.92**

(51) Int. Cl.$^5$ : **F16L 21/02**

(30) Priority : **25.03.91 GB 9106265**

(43) Date of publication of application :
**30.09.92 Bulletin 92/40**

(84) Designated Contracting States :
**BE DE FR GB NL**

(71) Applicant : **STANTON BONNA CONCRETE LIMITED**
**Littlewell Lane, Stanton-By-Dale**
**Ilkeston, Derbyshire, DE7 4QW (GB)**

(72) Inventor : **Dixon, Stephen**
**6 Low Green**
**Copmanthorpe, Yorkshire YO2 3SB (GB)**
Inventor : **Askew, David**
**14 Henshaw Place**
**Ilkeston, Derbyshire DE7 8RL (GB)**

(74) Representative : **Heath, Peter William Murray et al**
**FRY, HEATH & SPENCE, St. Georges House, 6 Yattendon Road**
**Horley, Surrey RH6 7BS (GB)**

(54) Gasket arrangements for pipe joints and pipe joints including the same.

(57) A spigot and socket pipe joint and a gasket arrangement therefor in which the gasket arrangement comprises an outer gasket member of one or more parts lying around the inner wall of a pipe socket and an inner gasket member of one or more parts lying around a pipe spigot disposed within the socket, the two gasket members interengaging and interacting to form a fluid tight seal.

FIG.1.

EP 0 506 356 A2

This invention relates to gasket arrangements for pipe joints and to pipe joints incorporating the same. More particularly the invention relates to such gasket arrangements and pipe joints of the spigot and socket form in which the spigot of one pipe is inserted into the socket of another pipe, sealing between the spigot and socket being at least partly by means of an annular gasket arrangement disposed between the inner surface of the socket and outer surface of the spigot.

Such spigot and socket joints between pipes do of course include joints between pipes where a sleeve of appropriate internal diameter is used to connect in a spigot and socket manner two juxtaposed spigot ends of pipes which lie within the sleeve, annular gasket arrangements being provided to ensure sealing of both spigot ended pipes within the sleeve.

It is to be understood that the expression "pipes" as used herein includes pipes and tubes as such and also pipe-like members and fittings for use in pipework such as bends, elbows, T connectors, flange adaptors and parts and devices adapted to be fitted by pipe-like parts to pipework such as valves and pumps. The expression "pipes" includes pipes formed of a plurality of parts or sections.

It is an object of the present invention to provide a gasket arrangement for spigot and socket pipe joints, and a pipe joint incorporating such a gasket arrangement, of a simple and effective nature.

In accordance with one aspect of the present invention there is provided a gasket arrangement for a spigot and socket pipe joint comprising an outer gasket member of one or more parts arranged in use to lie around the inner wall of a pipe socket, and an inner gasket member of one or more parts arranged in use to lie around a pipe spigot whereby in use upon insertion of the pipe spigot into the socket the two gasket members interengage and interact to form a fluid tight seal.

In accordance with another aspect of the present invention there is provided a spigot and socket pipe joint including a gasket arrangement comprising an outer gasket member of one or more parts lying around the inner wall of a pipe socket, and an inner gasket member of one or more parts lying around a pipe spigot disposed within the socket, the two gasket members interengaging and interacting to form a fluid tight seal.

The inner gasket may be arranged in use to slidingly engage the outer gasket, and be located radially therewithin.

The inner gasket member may be provided by an annular ring, as may the outer gasket member. The inner gasket member may be formed into a ring of a size less than that of the spigot about which it is in use disposed so that it is, when in use, under tension to assist in retaining it in place on the spigot.

At least one of the gasket members may be provided with ribs and/or protrusions around the surface or surfaces thereof arranged in use to engage sealingly with the other gasket member so as to enable the provision of multiple area contact between the respective sealing surfaces of the two gasket members.

One gasket member may be substantially softer than the other gasket member so that it is deformed by and conforms to the configuration of the other gasket member.

At least one of the gasket members may be formed of foamed or cellular elastomeric material to allow easy jointing between the members on make-up of the spigot and socket joint. The gasket members may be formed of any appropriate natural or synthetic elastomeric material.

At least one of the gasket members may be arranged to be bonded to the respective spigot and/or socket surface on which it is arranged to be laid so as effectively to resist shear loads during mating of the gasket members during make-up of the spigot and socket joint or as a result of later axial movement within the joint. Additionally, such bonding allows significant tolerance in finish of the surfaces of the gaskets contacting the socket and spigot without prejudicing the gasket seal. In a preferred embodiment at least one of the gaskets may be provided with indentations or grooves on the surface thereof arranged to lie against the spigot and/or socket respectively, a bonding material such as a thermo setting resin being arranged in use to be disposed on the surface of the spigot and/or socket respectively against which that surface of the gasket member lies, the quantity of resin used being such as to fill at least partially the indentations or grooves to aid in the bonding and resistance to movement of the gasket or gaskets.

At least one of the gasket members may have an inclined leading end to assist sliding engagement between the two gasket members in use during make-up of the spigot and socket joint.

At least one of the gasket members may be provided with a transverse lip adapted to overlie the end of the spigot and/or socket as the case may be to assist in holding the respective gasket member in place. Such lip when disposed on the inner gasket member may additionally act as a seal against an internal shoulder of the socket.

In order that the invention may be more readily understood embodiments thereof will now be described by way of example with reference to the accompanying drawings in which:-

Figure 1 shows in section part of a pipe joint of a spigot and socket nature incorporating a gasket arrangement in accordance with the invention;
Figure 2 shows, on an enlarged scale, the pipe joint of Figure 1 in its made-up condition;
Figure 3 shows a variation of the pipe joint of Figure 2; and
Figures 4, 5 and 6 show, in scrap views in section, further variations of the arrangement of Figure 3.

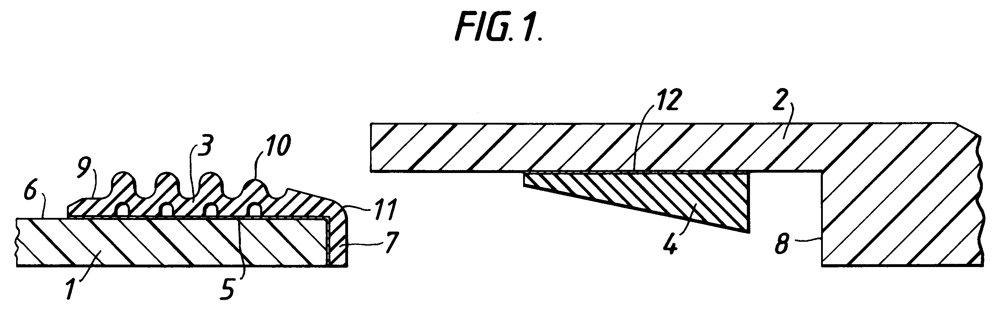

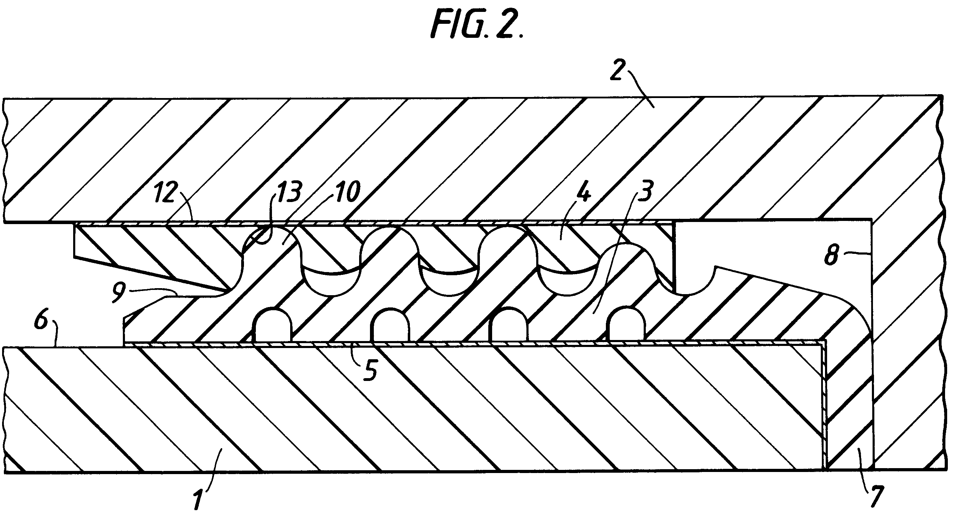

Referring now to Figures 1 and 2 it will be seen that a juxtaposed pipe spigot 1 and pipe socket 2 are shown. Typically these are of glass reinforced plastics material of laminated construction or of concrete for example. They may be of circular, egg-shaped or other obovate section for example, and may be for sewage pipe or pipe lining usage or sewage outfull pipe purposes for example. Whilst the indicidual pipes may be connected separately and suspended or free-lying or laid in a trench and subsequently covered over for example, they may alternatively be threaded into a pipe for relining or formed into a pipe-line by a jacking technique where a string of pipes is pushed by a jacking device into a pre-bored horizontal hole, a succession of pipes being added in turn at the jacking device, spigot end first, into engagement with the socket of the preceding pipe. Although such pipes for such purposes are usually only required for internal relatively low pressure, higher pressures can be required in some utilisations.

The spigot and socket pipe joint shown in Figure 1 is provided with a gasket arrangement comprising two annular gasket members 3,4.

The inner gasket member 3 disposed about the pipe spigot is of a relatively hard hubber (typically of 70 shore hardness) and has an inner radial surface 5 adhered to the outer peripheral surface 6 of the spigot 1 by means of a resin glue for example. The inner gasket member 3 has a peripheral lip 7 overlying the end of the spigot and serving to assist retention of the gasket member 3 in place on the spigot 1, prevent any splintering of the spigot end when contacting an internal shoulder 8 of the socket 2 during make-up of the joint of if the spigot is misaligned to the socket, and additionally providing a seal against the shoulder 8 of the pipe socket 2 when fully made-up. The outer peripheral wall 9 of the inner gasket member 3 is provided with four annular ribs 10 disposed therearound. In addition, the leading end of the inner gasket member 3 tapers radially outwardly from its end 11 so as to assist sliding engagement between the gasket members 3,4 during make-up of the joint.

The outer or socket gasket member 4 is of an annular configuration and in section, as can be seen, is of a simple wedge shape, although other convenient and appropriate configurations can be used. Typically the outer gasket member 4 is formed from a strip of neoprene foam or soft rubber (which may for example be of 30 to 35 shore hardness) which is slit at an inclined angle along its length to provide the wedge shaped section shown, and then formed into a ring around the inside of the pipe socket 2 and adhered thereto along its engaging surface 12 by means of a resin glue for example. Alternatively, the gasket member may be moulded or extruded.

During make-up of the pipe joint of Figure 1 the harder inner gasket member 3 slides upon and deforms the softer outer gasket member 4 until the position shown in Figure 2 is reached. As will be appreciated, at this disposition the pipe spigot 1 is firmly in place within the pipe socket 2, and a seal is provided by the firm contact between the ridges 10 of the inner gasket member 3 with the wedge of the outer gasket member 4 (deformed into troughs 13 by the ridges of the spigot gasket member).

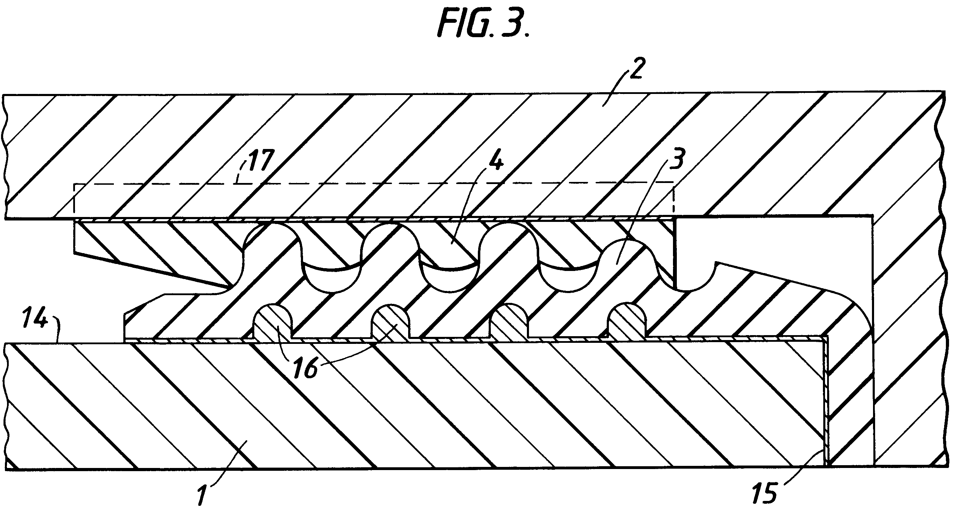

In Figure 3 is shown a similar arrangement to that of Figures 1 and 2 except that additional measures are taken to increase the integrity of the location of the spigot and socket gasket members during make-up of the joint.

Thus, it will be seen that not only is the inner gasket 3 adhered to the relevant surfaces 14,15 of the pipe spigot 1, but sufficient resin glue is utilised on the spigot 1 to fill four internal peripheral annular grooves 16 in the radially inner surface of the spigot gasket member thereby providing firm anchoring positions against any axially outward movement tendency of that gasket during make-up of the joint or subsequently.

Additionally, as is shown in dotted line 17, the soft rubber or neoprene foam outer gasket member 4 may be of increased thickness so as to lie within a peripheral groove around the radially inner surface of the socket, the outer gasket member 4 then being adhered within the groove. Such an arrangement again increases the resistance of the outer gasket to axial movement during make-up of the joint or subsequently. Such an arrangement enables the gaskets to be used with higher pressures and/or provides longer term integrity assurance of the made-up joint.

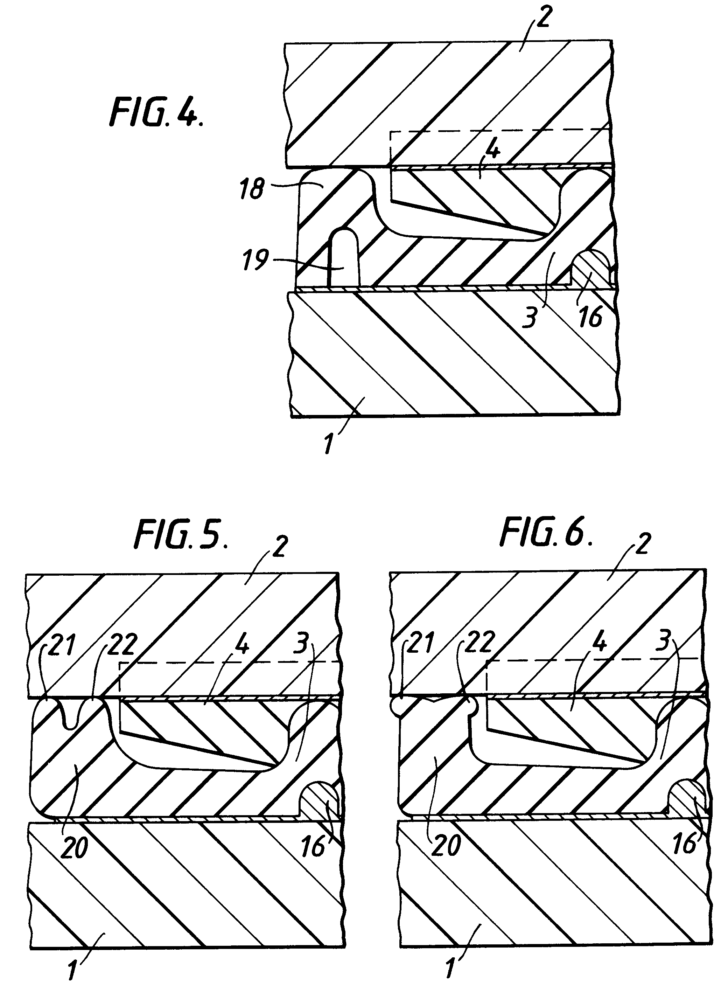

It is to be appreciated that by using the soft outer gasket member there is a potential for movement of the components of the joint laterally to the axis of the joint in certain circumstances, such as when overfilling a pipe-line laid in a trench for example. To limit such lateral movement, means may be provided associated for example with the inner gasket of the kind illustrated in Figures 4, 5 and 6. The arrangement of Figure 4 illustrates a configuration of inner gasket member 3 where the trailing end thereof is provided with a radially outward bulge 18, having an annular hollow 19 (to permit limited compression) which limits lateral movement of the socket 2 upon the spigot 1.

Figures 5 and 6 show a similar arrangement of a radially outward bulge 20 on the trailing end of the inner gasket member 3 which in this case has a radially outer twin annular rib 21,22 feature so as to accommodate reasonable tolerance levels between the socket and spigot whilst still resisting undue lateral movement of the pipe and socket with respect to each other.

In Figure 5 a wide tolerance between spigot and socket is shown with little deformation of ribs 21,22 whilst in Figure 6 significant deformation of the ribs is shown with a narrow tolerance between spigot and socket.

It is to be understood that the foregoing is merely exemplary of gasket arrangements and pipe joints incorporating such gasket arrangements in accordance with the invention and that modifications can readily be made thereto without departing from the true scope of the invention. Thus, for example, the relative hardness and configuration of the inner and outer gasket members can be interchanged.

## Claims

1. A gasket arrangement for a spigot and socket pipe joint comprising an outer gasket member of one or more parts arranged in use to lie around the inner wall of a pipe socket and an inner gasket member of one or more parts arranged in use to lie around a pipe spigot whereby in use upon insertion of the pipe spisot into the socket the two gasket members interengage and interact to form a fluid tight seal.

2. A gasket arrangement as claimed in Claim 1 wherein the inner gasket member is arranged in use to slidingly engage the outer gasket member.

3. A gasket arrangement as claimed in Claim 2 wherein the inner gasket member is located radially within the outer gasket member.

4. A gasket arrangement as claimed in any one of the preceding Claims wherein the inner gasket member is in the form of an annular ring.

5. A gasket arrangement as claimed in any one of the preceding Claims wherein the outer gasket member is in the form of an annular ring.

6. A gasket arrangement as claimed in Claim 5 wherein the inner gasket member in the form of a ring of a size less than that of the spigot about which it is in use to be disposed.

7. A gasket arrangement as claimed in any one of the preceding Claims wherein as least one of the gasket members is provided with ribs and/or protrusions arounde the surface or surfaces thereof arranged in use to engage sealingly with the other gasket member.

8. A gasket arrangement as claimed in any one of the preceding Claims wherein one gasket member is formed such as to be substantially softer than the other gasket member so as to be deformed by and conformed to the configuration of the other gasket member in use.

9. The gasket arrangement as claimed in any one of the preceding Claims wherein at least one of the gasket members is formed of a foam or cellular elastomeric material.

10. A gasket arrangement as claimed in any one of the preceding Claims wherein at least one of the gasket members has an inclined leading end.

11. A gasket arrangement as claimed in any one of the preceding Claims wherein at least one of the gasket members is provided with a transverse lip arranged in use to overlie the end of the spisot and/or socket respectively.

12. A gasket arrangement as claimed in Claim 11 wherein said lip is disposed on the inner gasket member and additionally acts as a seal against an internal shoulder of the socket in use thereof.

13. A spigot and socket pipe joint including a gasket arrangement comprising an outer gasket member of one or more parts lying around the inner wall of a pipe socket, and an inner gasket member of one or more parts lying around a pipe spigot disposed within the socket, the two gasket members interengaging and interacting to form a fluid tight seal.

14. A spigot and socket joint as claimed in Claim 13 wherein at least one of the gasket members is bonded to the respective spigot and/or socket surface on which it is laid.

15. A spigot and socket joint as claimed in Claim 13 or 14 wherein at least one of the gasket members is provided with indentations or grooves on the surface thereof lying against the spigot and/or socket respectively, a bonding material being disposed on the surface of the spigot and/or socket respectively against which that surface of a gasket member lies such as to fill at least partially the indentations or grooves.

FIG.1.

EP 0 506 356 A2

FIG. 2.

EP 0 506 356 A2

FIG.3.

FIG.4.

FIG.5.

FIG.6.